# EUROPEAN PATENT SPECIFICATION

(11) **EP 0 876 265 B1**
(45) Date of publication and mention of the grant of the patent: **14.08.2002**
(21) Application number: 97901848.8
(22) Date of filing: 14.01.1997
(51) Int. Cl.: B60R 19/02, B62D 21/00, B62D 25/00

(54) **BUMPER, AND THE FABRICATION THEREOF**
STOSSDÄMPFER UND HERSTELLUNGSVERFAHREN
PARE-CHOCS ET SA FABRICATION

(30) Priority: 24.01.1996 NO 960288
(43) Date of publication of application: 11.11.1998
(73) Proprietor: NORSK HYDRO ASA, 0240 Oslo (NO)
(72) Inventor: PEDERSEN, Roald, H., N-2800 Gjovik (NO)
(74) Representative: Patentanwälte Leinweber & Zimmermann
(86) International application number: PCT/NO97/00011
(87) International publication number: WO 97/27082

(56) References cited:
- EP-A- 0 687 743
- EP-A- 0 733 540
- WO-A-93/04897
- WO-A-94/20322
- DE-A- 19 519 110
- DE-C- 4 214 557

## Description

The present invention relates to a method for fabrication of a structural beam or bumper according to the precharacterizing clause of claim 1. Such a method is known from WO93/04897.

Furthermore, the invention relates to a beam or bumper, fabricated by the said method.

According to Fig. 4 of WO93/04897, the cross-section of a center portion may be a lot larger than of terminal portions. Therefore, it is necessary to compress the terminal portions to a very high extent.

The same applies, mutatis mutandis, with view to the teaching of DE-C-42 14 557. Namely, as is to be taken from Fig. 3 thereof, it is necessary to process a blank to a very high degree in order to obtain an outwardly pressed cross-section as predefined by molds 12, 13.

From EP 0 602 138 B1 (Norsk Hydro/Clausen) there is known a structural beam, especially for use in a vehicle frame, said structural beam being constituted by an integrated unitary extruded forming piece having a closed cross section and along its extension defining a hollow space having variable cross section surfaces.

### Background of the invention

The motive of the present invention is the task of providing a bumper which combines the protection of a vehicle and persons in the vehicle upon collision.

Further, the invention has for its objective to provide a bumper which excels in high torsional stiffness, combined with great bending softness.

A further objective of the present invention is to provide a bumper rendering the possibility for rational and structural sturdy attachment to the frame of the vehicle.

An object of the present invention is also to provide an elastic and relatively slender structural beam or bumper which in relation to previously known profile based, closed bumpers, may absorb more elastic bending energy in relation to quantity of used material.

Further, the invention relates to a method which renders a rational production of bumpers of said type, the method at the same time being specifically favourable for high rate forming in a production line.

### Brief disclosure of the invention

These and other objects are achieved by a method as laid down in claim 1 and by a beam or bumper according to claim 10. Preferred embodiments are claimed in the dependent claims.

Consequently, by starting with a basic cross section which is so to say kept unchanged on each side of the centre, at the same time as the centre portion is processed to an outwardly pressed cross section at the centre, and at the same time as the terminal portions are processed to a compressed or folded cross section, there is achieved a particularly favourable varying cross section rendering a specifically favourable resilient effect upon collision at velocities up to 4 km/h. Also at velocities above 4 km/h the structural beam in the form of a bumper devises good collision qualities, since the overall profile can absorb more energy even at a lower weight, compared to corresponding bumper rails.

Additionally, there is secured very favourable torsional stiffness, by maintaining the hollow chamber profile and by processing the bumper blank as a single item.

A specific embodiment of such a bumper may involve that the cross section at each side of the centre comprises an outer wall portion, an arched inner wall portion, as well as yoke portions extending substantially perpendicularly from said outer wall portion that said cross section at the centre has a substantially trapeze shaped cross section comprising an outer wall portion having substantially the same hight as said intermediate cross section and an inner wall portion of lesser hight, as well as substantially slanted yoke portions therebetween, and that said cross section at the terminal portions has an outer wall portion having substantially the same hight as said intermediate cross section and an inner wall portion having larger, equal or less hight and having intermediate, arched or wavy yoke portions.

The trapeze shaped cross section at the centre can then by simple processing of the original yoke portions and the arched surfaces of the inner wall be given a predetermined shape, at the same time as said basic cross section at each side of the centre will allow for easier manipulation of the shape of the product. Further, with said basic cross section on each side of the centre it is possible to undertake a controlled compression for folding of the areas at each of the terminal portions, so that the latter constitute the more slender part of the bumper.

Further, it is appropriate that this type of bumper comprises a closed cross section having a front wall portion, a rear wall portion and intermediate yoke portions, said front and rear portions having a relatively large wall thickness compared to the wall thickness of the intermediate yoke portions.

Further, it is to be understood that the front wall portion can be substantially straight, or be provided with a more or less contoured shape.

Further appropriately, the terminal portions may be so prepared that they merge into attachment portions which are provided with individual parallel surfaces against associated side beam for attachment thereto.

Further, it is to be understood that the bumper may be prepared substantially symmetrically about a central plane extending in the longitudinal direction of the car, and be provided with an outer mantle of plastic material.

A method for manufacturing a structural beam or bumper of the type as stated in the preamble will involve starting off with an extruded profile having a given basic cross section and by the further processing of this profiled blank letting the latter basic cross section be maintained on each side of the centre, whereas in the area of the centre letting the basic cross section be processed to a more or less protruding cross section, at the same time as letting the profile at the terminal portions be processed to a more compressed or folded cross section.

More specifically the method is to the fact that one starts off with a cross section which at each side of the centre has an intermediate cross section comprising an outer wall portion, an arched inner wall portion, as well as yoke portions extending substantially perpendicularly from the outer wall portion, that the cross section at the centre is processed by substantially outwardly pressing of the yoke portion for the provision of a substantially trapeze shaped cross section comprising an outer wall portion having substantially the same hight as the intermediate cross section and an inner wall portion of smaller hight, as well as substantially inclined yoke portions therebetween, and that at the terminal portions the intermediate cross section is processed to an outer wall portion having substantially the same hight as said intermediate cross section and an inner wall portion having larger, equal or less hight, the intermediate yoke being processed to bulge or bend outwardly in relation to said outer wall portion.

It is further appropriate that the extruded blank to be used, which has a closed cross section and a front wall portion and a rear wall portion, as well as intermediate yoke portions, also has front and rear wall portions having a relatively larger wall thickness of said intermediate yoke portions. The front wall portion may be substantially straight, or have a more or less contoured form.

Appropriately, said terminal portions may be further processed or simultaneously processed to comprise attachment portions which are provided with a net parallel surface related to appropriate side beams of the vehicle.

Further appropriately, the method is to the fact of manufacturing a bumper profile which is substantially symmetrical about a centre plane extending in the longitudinal direction of the car, at the same time as the finished bumper will be provided with an outer mantle of plastic material.

A further feature according to the method according to the invention is to the fact that the bumper is manufactured by outer processing, said outer processing taking place by means of mechanical tools.

Alternatively, hydroforming can be used.

Further advantages and specific features of the present invention will appear from the following description taken in connection with the attached drawings, as well as from the appended patent claims.

### Brief disclosure of the drawings

Fig. 1 is a schematic view as seen from above of a symmetrical half of a structural beam, especially a bumper beam according to the invention.

Fig. 2 is a side view of the bumper rail half according to Fig. 1.

Fig. 3 is a perspective view of a cut-out of the terminal portion of the bumper rail illustrated in Figures 1 and 2.

Figures 4, 5, 6 and 7 are cross sections taken along the lines IV-IV, V-V, VI-VI as well as VII-VII, respectively, according to Fig. 1.

Fig. 8 is a perspective view of a bumper rail having a specifically formed terminal portion for net parallel attachment, Figures 8A, 8B and 8C defining the various cross section forms along said bumper rail, Figures 8AX, 8AY and 8AZ defining various forms of the outer wall portion.

Fig. 9 is a perspective cut-out of a terminal portion of a bumper rail provided with attachment portions for non-net parallel attachment.

Figures 10-12 illustrate examples of calculation models for an embodiment of a structural beam according to the invention, said model being compiled according to the "finite element" method.

### Detailed description of embodiments

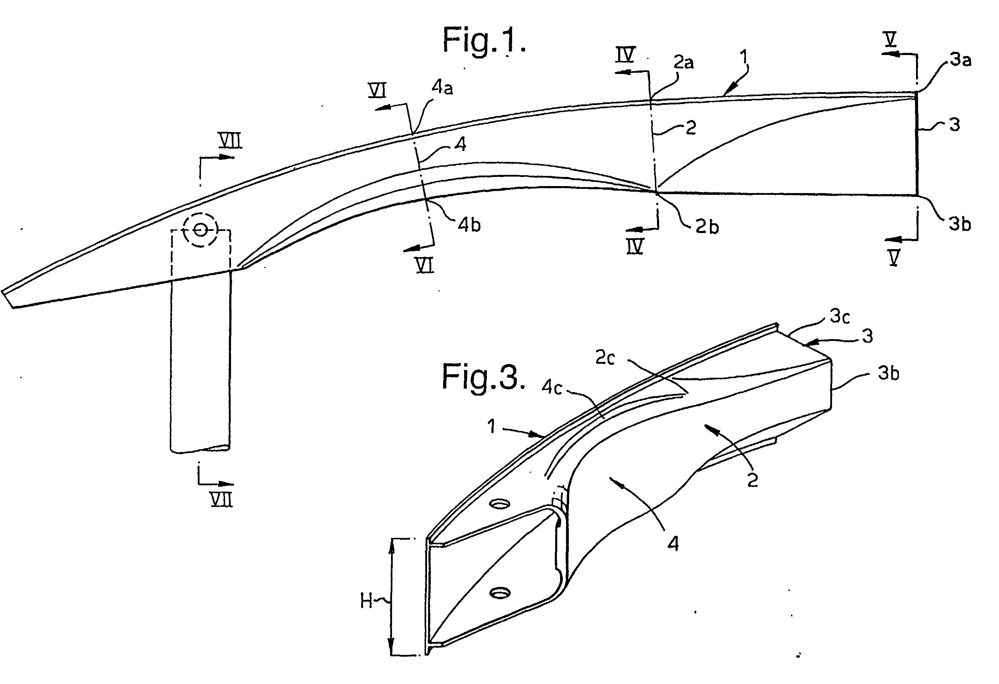

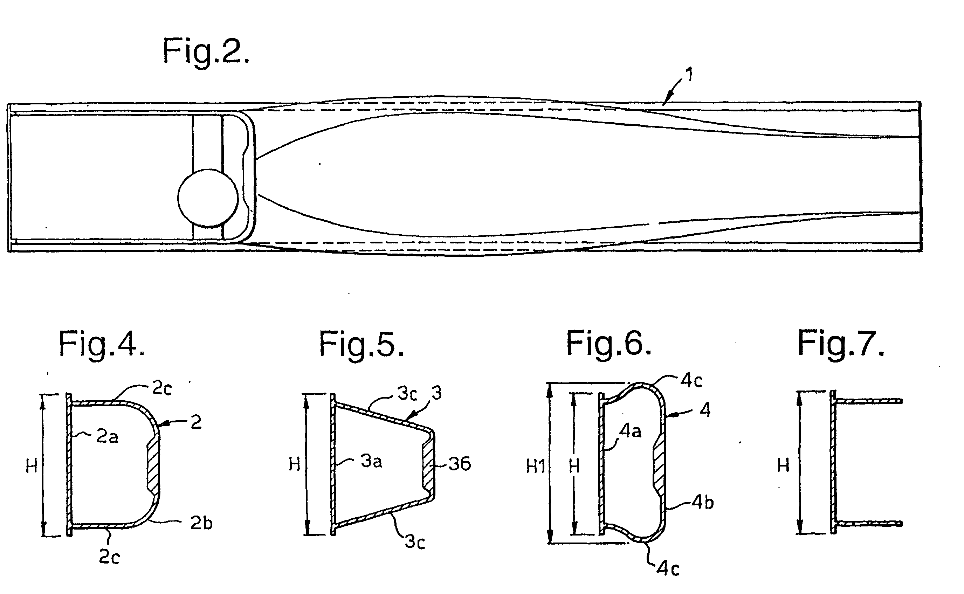

In Figures 1-7 there is illustrated an example of a structural beam, especially a bumper beam according to the invention, Fig. 1 illustrating schematically a view as seen from above of a symmetric half of said rail 1, whereas Fig. 2 illustrates a side view of the same rail, and Fig. 3 illustrates perspectively details of the terminal portion of the bumper rail 1 illustrated in Figures 1 and 2.

Figures 4, 5, 6 and 7 represent cross sections taken along the lines IV-IV, V-V, VI-VI, as well as VII-VII, respectively, illustrated in Fig. 1.

The bumper rail 1 is in Figures 1-7 illustrated in its finished processed form, and is as such adapted for absorbing collision energy and forces when used in a car, it being preferably as a bumper, but also as a supporting beam in the overall structure of the car.

The bumper 1 is made from a complete and hollow extruded blank which is manufactured from an extrudable material, for example aluminum, or any other materials or mixtures having corresponding extrudable and strength-related properties. The blank has in its initial form a basic cross section 2 of the type which is specifically illustrated in Fig. 4, and which comprises an outer wall portion 2a of substantially straight design and having a hight H, an arched inner portion 2b as well as yoke portions 2c extending substantially perpendicularly from the outer wall portion 2a. This basic cross section 2 is on both sides of the centre, see IV-IV in Fig. 1 and Fig. 4, according to the present invention maintained so to say unchanged, whereas at the centre portion itself, see V-V in Fig. 1 and Fig. 5, the basic cross section has been given an outwardly pressed cross section 3, whereas in the areas of each of the terminal portions, here at section VI-VI in Fig. 1, see also Fig. 6, the basic cross section 2 has been compressed or folded to a further cross section 4, which is different from the basic cross section.

In other words, the bumper rail 1 is manufactured on the basis of a basic cross section on each side of the centre, and an outwardly pressed cross section at the centre in relation to said basic cross section, as well as a compressed or folded cross section in the areas of each of the terminal portions.

It is to be understood that the transition between the basic cross section 2 and the centre cross section 3 and said terminal cross sections 4, respectively, is gradual and smooth, and can, of course, be varied within large ranges.

Further, it is to be understood that the outer wall portion can deviate from the wall portion 2a as illustrated here, namely by being substantially straight, or be designed with a more or less contoured shape.

In the embodiment which is specifically illustrated in Figures 1-7, the cross section 3 at the centre, see specifically Fig. 5, is pressed out to a substantially trapeze shaped cross section 3, comprising a straight inner wall portion 3a having substantially the same hight H as said inner wall portion 2b of said intermediate cross section 2, and having an inner wall portion 3b of lesser hight, at the same time as there are provided substantially inclined yoke portions 3c between said straight inner wall portion 3a and said outer wall portion 3b.

The cross section 4 at the terminal portions, see specifically Fig. 6, is in this embodiment compressed or folded to comprise a straight outer wall portion 4a having substantially the same hight H as the outer wall portion 2a for said intermediate cross section 2, see Fig. 4, as well as an inner wall portion 4b which is here folded out to a larger hight H1 than said outer wall portion 4a, and then with intermediate arched or wavy yoke portions 4c.

It is to be understood that the cross section 4 at the terminal portions, see Fig. 6, can have an inner wall portion which can be equal or less than said hight corresponding to the hight H for said intermediate cross section 2, all in dependence of the desired final form which the bumper or the power beam according to the present invention is to be given.

In the embodiment illustrated in Figures 1-7 the starting point is a cross section 2, see Fig. 4, which constitutes a closed cross section, the front wall portion 2a and the rear wall portion 2b being provided with or comprising portions having a larger wall thickness than the wall thickness of the intermediate yoke portions 2c.

As stated in the preamble it is possible by having as a starting point a basic cross section which so to say is kept unchanged on each side of the centre, at the same time as the centre portion is processed to an outwardly pressed cross section at the centre and a compressed or folded cross section at the side portions or terminal portions, to achieve a specifically favourable varying cross section, which renders a specifically favourable resilient effect upon collision at velocities up to 4 km/h, and at velocities above 4 km/h will devise favourable collision qualities. The overall profile will be able to absorb more energy even at lower weight, compared with corresponding bumper rails, for example profile based, closed bumpers.

Additionally, there is, by this form of profile rail, secured a very favourable torsional stiffness, since the hollow chamber profile is maintained and the bumper blank can be processed on the basis one continuous working blank.

It is to be understood that the profile or bumper rail 1 can be made substantially symmetrical about a centre plane running in the longitudinal direction of the vehicle, and beyond this be provided with an outer mantle of plastic material.

If the structural beam according to the invention is to be used as a structure element in the vehicle as such, this symmetrical design can appropriately be alleviated.

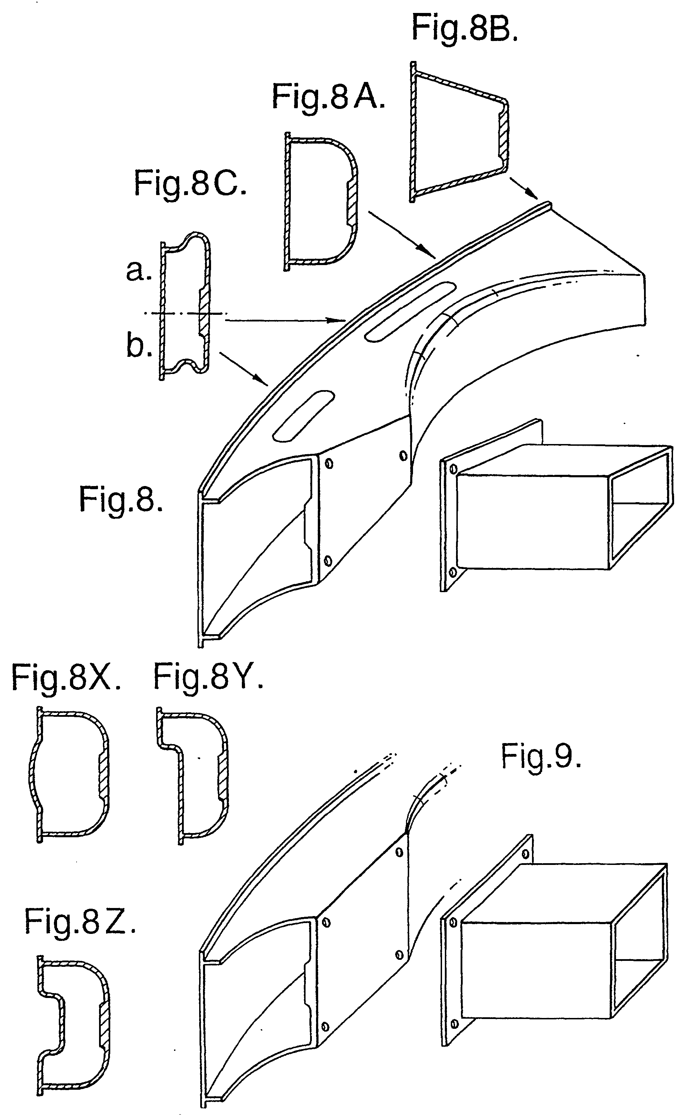

Appropriately, said terminal portions may merge into attachment portions, as this is specifically illustrated in Figures 8 and 9, said attachment portions being provided with a net parallel surface against side beams of the vehicle.

Fig. 8 with its sections 8A-8C illustrates a specific design of the terminal portions for net parallel attachment, and the sections illustrated in Figures 8A, 8B and 8C are designed substantially in accordance with the sections as discussed in connection with Figures 4, 5 and 6. However, in Fig. 8C there are illustrated alternative a and alternative b for various bendings of the processed section 5 at the terminal portions.

Further, there is in Fig. 8AX illustrated a variant of the basic cross section comprising an outer portion which deviates from being straight, but which rather has an outwardly bulging contour, whereas Fig. 8AY illustrates an asymmetrical outer portion, and Fig. 8AZ illustrates a substantially mirror symmetrical section having an inwardly bulging contour.

In Fig. 9 there is illustrates a perspective view of a terminal portion of a bumper rail provided with attachment portions for non-net parallel attachment.

It is to be understood that the processing of the blank can take place by a first stretching to the basic shape, especially a modestly arched shape in the longitudinal direction of the blank, whereafter the profile is simultaneously processed at the centre portion and the terminal portions, but with the opposite processing direction for said portions.

Alternatively, said processing may be to the fact that the blank is processed by means of hydroforming.

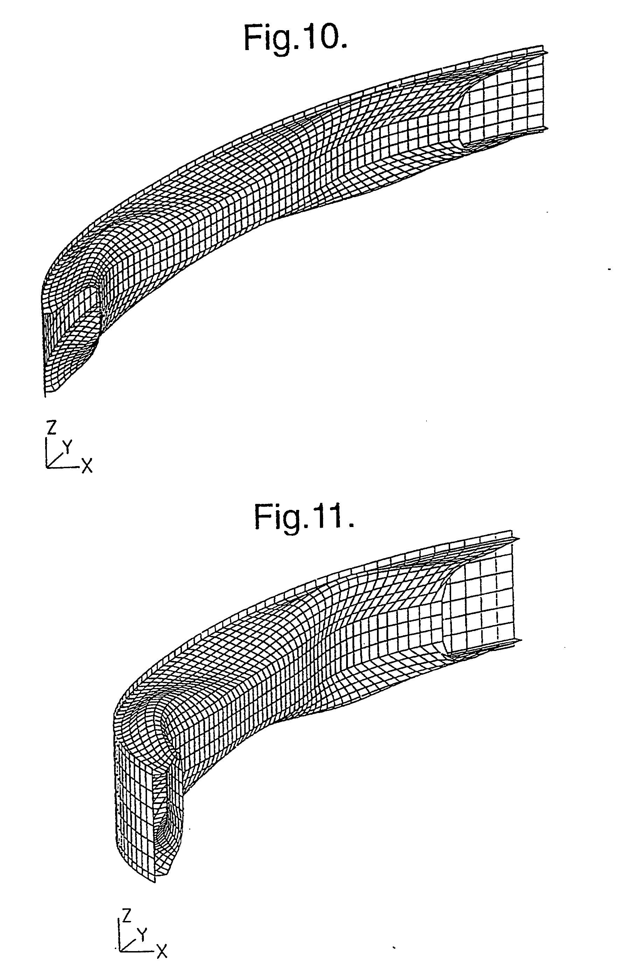

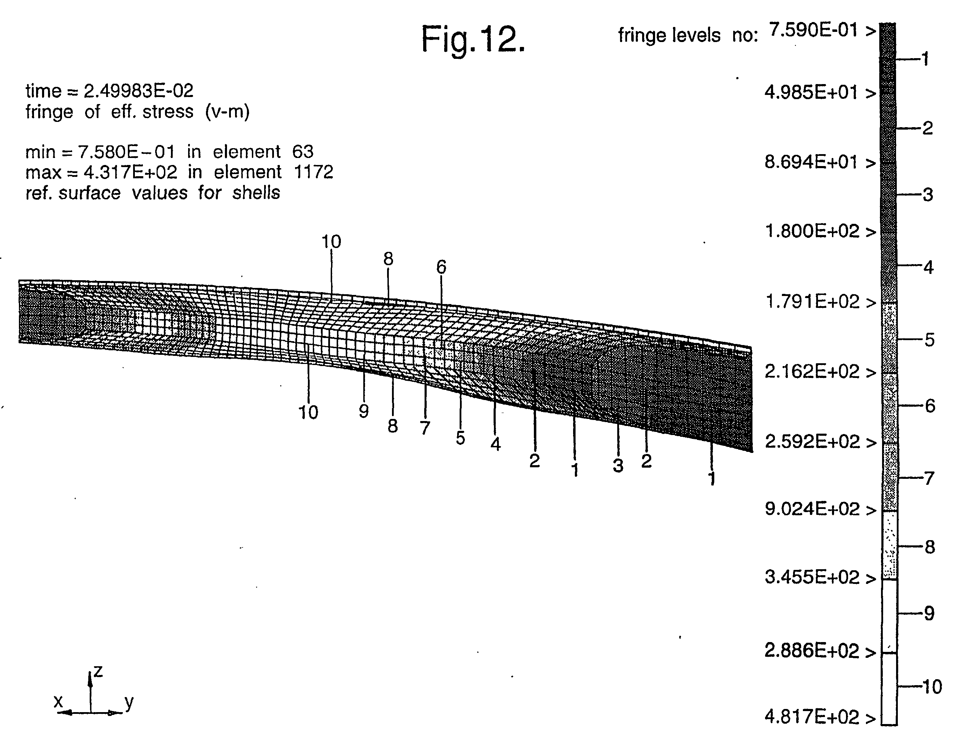

In Figures 10-12 there is illustrated examples of calculated models of an embodiment of a structural beam according to the invention. Figures 10 and 11 illustrate various perspective views of the model which is compiled according to the "finite element" method. Fig. 12 illustrates the stress distribution in load case "barrier", and then more specifically equivalent stresses at "fringe" levels.

## Claims

1. A method for fabrication of a structural beam or bumper, especially for a vehicle, comprising an elongated profile which upon collision is adapted for absorbing collision energy and forces,
comprising the steps of
providing a complete and hollow blank having, along its more or less arched extension, a center portion (3), side portions (2) at each side of said center portion (3) and terminal portions (4) and
processing said blank to a compressed or folded cross section in said terminal portion (4),
**characterized by** the steps of
processing said blank to an outwardly pressed cross section in said center portion (3) and
processing said blank with a substantially unchanged basic cross section in each side portion (2).

2. The method of claim 1,
**characterized by** the step of processing said blank to an arched extension.

3. The method of claim 1 or 2,
**characterized in that** there is used a hollow blank the inside thereof being defined by a first wall portion (2a), an arched second wall portion (2b) and yoke portions (2c) extending substantially perpendicularly from the outer wall portion (2a), wherein
said center portion (3) is processed to a substantially trapeze shaped cross section comprising a first center wall portion (3a) having substantially the same height (H) as said blank, a second center wall portion (3b) of less height, and substantially inclined center yoke portions (3c) therebetween, and
said terminal portions (4) are processed to a cross section profile comprising a first terminal wall portion (4a) having the same height (H) as said blank, a second terminal wall portion (4b) having a larger, equal or less height (H) and intermediate, arched or wavy terminal yoke portions (4c).

4. The method of any preceding claim,
**characterized in that** as said blank there is used an extruded profile (2) having a closed cross section, said first and second wall portions (2a, 2b) having a larger wall thickness than the wall thickness of said intermediate yoke portions (2c).

5. The method of any preceding claim,
**characterized in that** the end portions of said blank are processed to attachment portions which are provided with a net parallel surface for attachment to a side beam in the vehicle.

6. The method of any preceding claim,
**characterized in that** the blank is processed to a profile which is substantially symmetrical about a center plane running in the longitudinal direction of the vehicle, and is provided with an outer mantle of plastic material.

7. The method of any preceding claim,
**characterized in that** the processing of the blank takes place in a first stretching or pressing to a main shape, especially a vaguely arched shape in the longitudinal direction of the blank, whereafter the profile at the same time or in a subsequent processing operation is processed at the center portion (3) and the terminal portions (4), but in opposite processing direction for said portions.

8. The method of any preceding claim,
**characterized in that** the blank is processed by an outer processing, for example by means of mechanical tools.

9. The method of any preceding claim,
**characterized in that** the blank is processed by means of hydroforming.

10. A structural beam or bumper, fabricated by the method of any preceding claim.

11. The beam or bumper of claim 10, especially for a vehicle, comprising an elongated profile which upon collision is adapted for absorbing collision energy and forces, the beam or bumper being prepared from a complete and hollow blank and being further provided with different cross sections along its more or less arched extension, wherein
said beam or bumper comprises a center portion (3), side portions (2) at each side of said center portion (3) and terminal portions (4) and
said beam or bumper has a compressed or folded cross section at each of said terminal portions (4), and that the beam or bumper in addition has a substantially unchanged basic cross section at each of said side portions (2), and has an outwardly pressed cross section relative to said basic cross section at said center portion (3).

12. The beam or bumper of claim 10 or 11,
**characterized in that**
it has an arched extension.

13. The beam or bumper of any of claims 10 to 12,
**characterized in that**
the inside of each of said side portions (2) is defined by a first wall portion (2a), an arched inner wall portion (2b), and yoke portions (2c) extending substantially perpendicularly from said outer wall portion (2a),
said center portion (3) has a substantially trapeze shaped cross section defined by a first center wall portion (3a) having the same height (H) as said side portions (2), a second center wall portion (3b) of less height, and substantially slanted yoke portions (3c) therebetween, and
said terminal portions (4) have a first terminal wall portion (4a) having substantially the same height (H) as said side portions (2), a second terminal wall portion (4b) having larger, equal or less height (H1) and intermediate, arched or wavy yoke portions (4c).

14. The beam or bumper of any of claims 10 to 13,
**characterized in that** it comprises a closed cross section (2) wherein said first and second wall portions (2a, 2b) have a relatively larger wall thickness than the wall thickness of said intermediate yoke portions (2c).

15. The beam or bumper of any of claims 10 to 14,
**characterized in that** said terminal portions (4) merge into attachment portions which are provided with a net parallel surface for attachment to a side beam in the vehicle.

16. The beam or bumper of any of claims 10 to 15,
**characterized in that**
its profile is provided substantially symmetrical about a center plane running in the longitudinal direction of the vehicle, and
it is provided with an outer mantle of plastic material.

## Patentansprüche

1. Verfahren zur Herstellung eines Strukturträgers oder Stoßfängers, insbesondere für ein Fahrzeug, wobei er ein längliches Profil aufweist, welches bei einer Kollision zum Absorbieren von Kollisionsenergie und -kräften dient,
wobei das Verfahren folgende Schritte umfasst:
ein komplettes und hohles Rohmaterialstück wird bereitgestellt, welches entlang seines mehr oder weniger bogenförmigen Verlaufes einen Mittelabschnitt (3), Seitenabschnitte (2) auf jeder Seite des Mittelabschnittes (3) und Endabschnitte (4) aufweist, und
das Rohmaterialstück wird beim Endabschnitt (4) zu einem zusammengedrückten oder gefalteten Querschnitt verarbeitet;
und durch die folgenden Schritte **gekennzeichnet** ist:
das Rohmaterialstück wird beim Mittelabschnitt (3) zu einem nach außen gedrückten Querschnitt verarbeitet und
das Rohmaterialstück wird mit einem im Wesentlichen unveränderten Basisquerschnitt in jedem Seitenabschnitt (2) verarbeitet.

2. Verfahren nach Anspruch 1,
**gekennzeichnet durch** einen Schritt, bei dem das Rohmaterialstück zu einem bogenförmigen Verlauf verarbeitet wird.

3. Verfahren nach Anspruch 1 oder 2,
**dadurch gekennzeichnet, dass** ein hohles Rohmaterialstück verwendet wird, dessen Inneres durch einen ersten Wandabschnitt (2a), einen bogenförmigen zweiten Wandabschnitt (2b) und Jochabschnitte (2c), die sich im Wesentlichen senkrecht vom Außenwandabschnitt (2a) erstrecken, begrenzt wird, wobei
der Mittelabschnitt (3) zu einem im Wesentlichen trapezförmigen Querschnitt verarbeitet wird, welcher einen ersten Wandabschnitt (3a), der im Wesentlichen die gleiche Höhe (H) wie das Rohmaterialstück besitzt, einen zweiten mittleren Wandabschnitt (3b) geringerer Höhe, und zwischen diesen befindliche im Wesentlichen geneigte mittlere Jochabschnitte (3c) aufweist, und
die Endabschnitte (4) zu einem Querschnittsprofil verarbeitet werden, welches einen ersten Endwandabschnitt (4a) von gleicher Höhe (H) wie das Rohmaterialstück, einen zweiten Endwandabschnitt (4b) von größerer, gleicher oder geringerer Höhe (H), und dazwischenliegende bogenförmige oder wellige Endjochabschnitte (4c) aufweist.

4. Verfahren nach einem der vorstehenden Ansprüche,
**dadurch gekennzeichnet, dass** als Rohmaterialstück ein Extrudierprofil (2) mit geschlossenem Querschnitt verwendet wird, wobei die ersten und zweiten Wandabschnitte (2a, 2b) eine größere Wanddicke als die dazwischenliegenden Jochabschnitte (2c) haben.

5. Verfahren nach einem der vorstehenden Ansprüche,
**dadurch gekennzeichnet, dass** die Endabschnitte des Rohmaterialstücks zu Befestigungsabschnitten verarbeitet sind, welche mit einer zum Netz parallelen Fläche zur Befestigung an einem Seitenträger im Fahrzeug versehen sind.

6. Verfahren nach einem der vorstehenden Ansprüche,
**dadurch gekennzeichnet, dass** das Rohmaterialstück zu einem Profil verarbeitet wird, welches im Wesentlichen symmetrisch um eine Mittelebene ist, die in Längsrichtung des Fahrzeugs verläuft, und mit einem Außenmantel aus Kunststoff versehen ist.

7. Verfahren nach einem der vorstehenden Ansprüche,
**dadurch gekennzeichnet, dass** die Bearbeitung des Rohmaterialstücks durch einen ersten Dehn- oder Pressvorgang zu einer Hauptform erfolgt, insbesondere zu einer in Längsrichtung des Rohmaterialstücks ungefähr bogenförmigen Form, und danach das Profil, gleichzeitig oder in einem aufeinanderfolgenden Bearbeitungsvorgängen, beim Mittelabschnitt (3) und den Endabschnitten (4) bearbeitet wird, jedoch für diese Abschnitte in entgegengesetzter Bearbeitungsrichtung.

8. Verfahren nach einem der vorstehenden Ansprüche,
**dadurch gekennzeichnet, dass** das Rohmaterialstück durch eine äußere Bearbeitung bearbeitet wird, beispielsweise mittels mechanischen Werkzeugen.

9. Verfahren nach einem der vorstehenden Ansprüche,
**dadurch gekennzeichnet, dass** das Rohmaterialstück mittels eines Hydroforming-Prozesses verarbeitet wird.

10. Strukturträger oder Stoßfänger, der mittels des Verfahrens nach einem der vorstehenden Ansprüche erzeugt wurde.

11. Träger oder Stoßfänger nach Anspruch 10, insbesondere für ein Fahrzeug, welcher ein längliches Profil aufweist, das zum Absorbieren von Kollisionsenergie und -kräften bei einer Kollision dient, wobei der Träger oder Stoßfänger aus einem kompletten und hohlen Rohmaterialstück erzeugt ist und weiter mit unterschiedlichen Querschnitten entlang seines mehr oder weniger bogenförmigen Verlaufes versehen ist, wobei
der Träger oder Stoßfänger einen Mittelabschnitt (3), Seitenabschnitte (2) auf jeder Seite des Mittelabschnittes (3) und Endabschnitte (4) aufweist und
der Träger oder Stoßfänger bei jedem der Endabschnitte (4) einen zusammengedrückten oder gefalteten Querschnitt aufweist, und der Träger oder Stoßfänger bei jedem der Seitenabschnitte (2) außerdem einen im Wesentlichen unveränderten Basisquerschnitt aufweist, und beim Mittelabschnitt (3) einen relativ zum Basisquerschnitt nach außen gedrückten Querschnitt aufweist.

12. Träger oder Stoßfänger nach Anspruch 10 oder 11,
**dadurch gekennzeichnet, dass**
er einen bogenförmigen Verlauf hat.

13. Träger oder Stoßfänger nach einem der Ansprüche 10 bis 12,
**dadurch gekennzeichnet, dass**
das Inneres jedes der Seitenabschnitte (2) begrenzt ist durch einen ersten Wandabschnitt (2a), einen bogenförmigen Innenwandabschnitt (2b) und Jochabschnitte (2c), die sich im Wesentlichen senkrecht vom Außenwandabschnitt (2a) erstrecken,
der Mittelabschnitt (3) einen im Wesentlichen trapezförmigen Querschnitt, der begrenzt ist durch einen ersten mittleren Wandabschnitt (3a) von gleicher Höhe (H) wie die Seitenabschnitte (2), einen zweiten mittleren Wandabschnitt (3b) geringerer Höhe, und zwischen diesen befindliche im Wesentlichen geneigte Jochabschnitte (3c) aufweist, und
die Endabschnitte (4) einen ersten Endwandabschnitt (4a) von im Wesentlichen gleicher Höhe (H) wie die Seitenabschnitte (2), einen zweiten mittleren Endwandabschnitt (4b) von größerer, gleicher oder geringerer Höhe (H1) und dazwischenliegende bogenförmige oder wellige Jochabschnitte (4c) aufweisen.

14. Träger oder Stoßfänger nach einem der Ansprüche 10 bis 13,
**dadurch gekennzeichnet, dass** er einen geschlossenen Querschnitt (2) hat, wobei die ersten und zweiten Wandabschnitte (2a, 2b) eine relativ größere Wanddicke als die dazwischenliegenden Jochabschnitte (2c) haben.

15. Träger oder Stoßfänger nach einem der Ansprüche 10 bis 14,
**dadurch gekennzeichnet, dass** die Endabschnitte (4) in Befestigungsabschnitte münden, welche mit einer zum Netz parallelen Fläche zur Befestigung an einem Seitenträger im Fahrzeug versehen sind.

16. Träger oder Stoßfänger nach einem der Ansprüche 10 bis 15,
**dadurch gekennzeichnet, dass**
sein Profil im Wesentlichen symmetrisch um eine Mittelebene vorgesehen ist, die in Längsrichtung des Fahrzeugs verläuft, und
er mit einem Außenmantel aus Kunststoff versehen ist.

## Revendications

1. Procédé de fabrication d'une poutre structurelle ou pare-chocs, plus particulièrement pour un véhicule, comprenant un profil allongé qui lors d'une collision est adapté pour absorber l'énergie et les forces de collision, comprenant les étapes consistant à fournir une pièce brute complète et creuse, le long de son extension plus ou moins cintrée, une partie centrale (3), des parties latérales (2) de chaque côté de ladite partie centrale (3) et des parties terminales (4) et
transformer ladite pièce brute en une section transversale comprimée ou pliée dans ladite partie terminale (4), **caractérisé par** les étapes consistant à
transformer ladite pièce brute en une section transversale emboutie vers l'extérieur dans ladite partie centrale (3) et
transformer ladite pièce brute avec une section transversale de base sensiblement inchangée dans chaque partie latérale (2).

2. Procédé selon la revendication 1,
**caractérisé par** l'étape consistant à transformer ladite pièce brute en une extension cintrée.

3. Procédé selon la revendication 1 ou 2,
**caractérisé en ce qu'**il est utilisé une pièce brute creuse dont l'intérieur est défini par une première partie de paroi (2a), une deuxième partie de paroi cintrée (2b) et des parties de bord (2c) s'étendant sensiblement perpendiculairement depuis la partie de paroi extérieure (2a), dans laquelle
ladite partie centrale (3) est transformée en une section transversale sensiblement en forme de trapèze comprenant une première partie de paroi centrale (3a) ayant sensiblement la même hauteur (H) que ladite pièce brute, une deuxième partie de paroi centrale (3b) de hauteur moindre, et des parties de bord centrales sensiblement inclinées (3c) entre lesdites parties, et
lesdites parties terminales (4) sont transformées en un profil à section transversale comprenant une première partie de paroi terminale (4a) ayant la même hauteur (H) que ladite pièce brute, une deuxième partie de paroi terminale (4b) ayant une hauteur (H) supérieure, égale ou inférieure et des parties de bord terminales intermédiaires, cintrées ou ondulées (4c).

4. Procédé selon l'une quelconque des précédentes revendications,
**caractérisé en ce que** comme ladite pièce brute il est utilisé un profil extrudé (2) ayant une section transversale fermée, lesdites première et deuxième parties de paroi (2a, 2b) ayant une épaisseur de paroi plus grande que l'épaisseur de paroi desdites parties de bord intermédiaires (2c).

5. Procédé selon l'une quelconque des précédentes revendications,
**caractérisé en ce que** les parties d'extrémité de ladite pièce brute sont transformées en des parties de fixation qui sont prévues avec une surface parallèle nette en vue de la fixation à une poutre latérale dans le véhicule.

6. Procédé selon l'une quelconque des précédentes revendications,
**caractérisé en ce que** la pièce brute est transformée en un profil qui est sensiblement symétrique par rapport à un plan central s'étendant dans la direction longitudinale du véhicule, et est fourni avec une enveloppe extérieure en matière plastique.

7. Procédé selon l'une quelconque des précédentes revendications,
**caractérisé en ce que** la transformation de la pièce brute a lieu par un premier étirement ou emboutissage en une forme principale, en particulier une forme légèrement cintrée dans la direction longitudinale de la pièce brute, après quoi le profil est simultanément ou ultérieurement transformé au niveau de la partie centrale (3) et des parties terminales (4), mais dans une direction de transformation opposée pour lesdites parties.

8. Procédé selon l'une quelconque des précédentes revendications,
**caractérisé en ce que** la pièce brute est transformée par une transformation extérieure, par exemple au moyen d'outils mécaniques.

9. Procédé selon l'une quelconque des précédentes revendications,
**caractérisé en ce que** la pièce brute est transformée au moyen de l'hydroformage.

10. Poutre structurelle ou pare-chocs fabriqué par le procédé de l'une quelconque des précédentes revendications.

11. Poutre ou pare-chocs selon la revendication 10, plus particulièrement pour un véhicule, comprenant un profil allongé qui lors d'une collision est adapté pour absorber l'énergie et les forces de collision, la poutre ou pare-chocs étant préparé à partir d'une pièce brute complète et creuse et étant en outre équipé de différentes sections transversales le long de son extension plus ou moins cintrée, dans lequel
ladite poutre ou pare-chocs comprend une partie centrale (3), des parties latérales (2) de chaque côté de ladite partie centrale (3) et des parties terminales (4) et
ladite poutre ou pare-chocs a une section transversale comprimée ou pliée à chacune desdites parties terminales (4), et la poutre ou pare-chocs de plus a une section transversale de base sensiblement inchangée à chacune desdites parties latérales (2), et a une section transversale emboutie vers l'extérieur par rapport à ladite section de base au niveau de ladite partie centrale (3).

12. Poutre ou pare-chocs selon la revendication 10 ou 11,
**caractérisé en ce que**
il a une extension cintrée.

13. Poutre ou pare-chocs selon l'une quelconque des revendications 10 à 12,
**caractérisé en ce que**
l'intérieur de chacune desdites parties latérales (2) est défini par une première partie de paroi (2a), une partie de paroi interne cintrée (2b) et des parties de bord (2c) s'étendant sensiblement perpendiculairement depuis ladite partie de paroi extérieure (2a),
ladite partie centrale (3) a une section transversale sensiblement en forme de trapèze définie par une première partie de paroi centrale (3a) ayant la même hauteur (H) que lesdites parties latérales (2), une deuxième partie de paroi centrale (3b) de hauteur moindre, et des parties de bord sensiblement inclinées (3c) entre, et
lesdites parties terminales (4) ont une première partie de paroi terminale (4a) ayant sensiblement la même hauteur (H) que lesdites parties latérales (2), une deuxième partie de paroi terminale (4b) ayant une hauteur (H1) supérieure, égale ou inférieure et des parties de bord terminales intermédiaires, cintrées ou ondulées (4c).

14. Poutre ou pare-chocs selon l'une quelconque des revendications 10 à 13,
**caractérisé en ce qu'**il comprend une section transversale fermée (2) dans laquelle lesdites première et deuxième parties de paroi (2a, 2b) ont une épaisseur de paroi relativement plus large que l'épaisseur de paroi desdites parties de bord intermédiaires (2c).

15. Poutre ou pare-chocs selon l'une quelconque des revendications 10 à 14,
**caractérisé en ce que** lesdites parties terminales (4) fusionnent dans des parties de fixation qui sont prévues avec une surface parallèle nette en vue de la fixation à une poutre latérale dans le véhicule.

16. Poutre ou pare-chocs selon l'une quelconque des revendications 10 à 15,
**caractérisé en ce que**
son profil est prévu sensiblement symétrique par rapport à un plan central s'étendant dans la direction longitudinale du véhicule, et
il est prévu avec une enveloppe extérieure en matière plastique.
